# EUROPEAN PATENT SPECIFICATION

(11) **EP 1 669 263 B1**
(45) Date of publication and mention of the grant of the patent: **16.01.2013**
(21) Application number: 05460014.3
(22) Date of filing: 03.06.2005
(51) Int. Cl.: B60R 22/00, B60R 22/02

(54) **Anatomical configuration of the safety belt in cars and accessories for its implementation**
Anatomische Konfiguration eines Sicherheitsgurtes in Kraftwagen und Zubehörteilen zu deren Implementation
Configuration anatomique d'une ceinture de sécurité pour voitures et accessoires pour sa mise en oeuvre

(30) Priority: 13.12.2004 PL 37170504
(43) Date of publication of application: 14.06.2006
(73) Proprietor: Beczkowski, Andrzej, 44-100 Gliwice (PL)
(72) Inventor: Andrzej Beczkowski, 44-100 Gliwice (PL); Krzysdorf Postawa, 44-100 Gliwice (PL)

(56) References cited:
- WO-A-00/41920
- WO-A-2005/085017

## Description

The subject matter of this invention is the way of the anatomical configuration of safety belts in cars after fastening, especially those for women, as well as accessories needed for their realization.

Generally, safety belts in cars fasten the chest and the abdomen of the passenger diagonally crossing the breast and exerting on it a constant pressure due to the tightening triggers. In the case of sensitive persons this irritates the epidermis and leads to a considerable discomfort, affecting also the collar-bone, because the height is not always adequate for the given passenger.

Due to the rubbing of the safety belt the driver must, from time to time, correct its arrangement by taking his hand off the steering wheel, which may prove to be dangerous.

In order to minimize all those problems pads may be used, made of some soft material wrapped around the belt and fastened alongside by means of a zip-fastener or a burr forming a sliding muff running along the diagonal part of the belt. Such pads neutralize, however, the constant pressure only practically, so that the constant pressure during a farther journey may cause the formation of a rubber and in the case of sudden braking or a collision the milch gland can be injured, which again would require onkological operations.

The invention of an anatomically shaped safety belt consists in its adaptation to the shape of the letter S, so that it would pass between the breasts.

For this purpose, a muff-shaped pad made of elastic plastic material, e.g. polyurethane foam, is deposited on the safety belt. Inside it is whale-boned in order to acquire the shape of an elongated S and can be fastened on one side.

The inside, adhering to the chest, should be reinforced to reduce the crookedness of the belt and to minimize the pressure of lateral forces in case of sudden braking and collisions.

The pad can be shifted along the belt adjusting it to the needs of the passenger. Although its situation is stable, it can be additionally fastened by means of a stay attached to the bottom part of the cover plate.

A special version of strap under the bust a guide slide is provided with one or more sliders to be fastened at its lower part. In this way it can be adjusted to the requirements of the body.

The anatomical shaping of the safety belt is to be seen in the enclosed Fig.1, showing a woman fastened by the safety belt with such a pad. Fig.2 presents the transverse cross-section, respectively. A part of the belt without pads but with sliding stays can be seen in Fig.6.

The anatomical shape of the safety belt 1 for women is provided with an adequately shaped cover plate (2) in the form of a flat muff made of elastic plastic material looking like an elongated S, inside equipped with also S-shaped whalebone 3, possibly made of polyurethane foam, on one side to be open and closed by any kind of fastener, e.g. a zipper 4 of a loop-clasp.

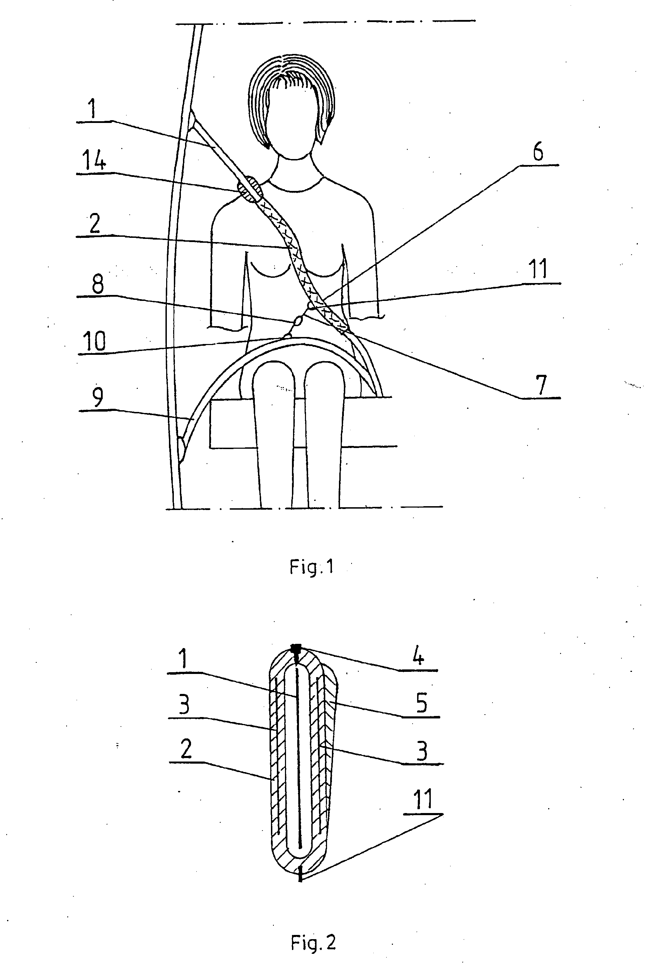

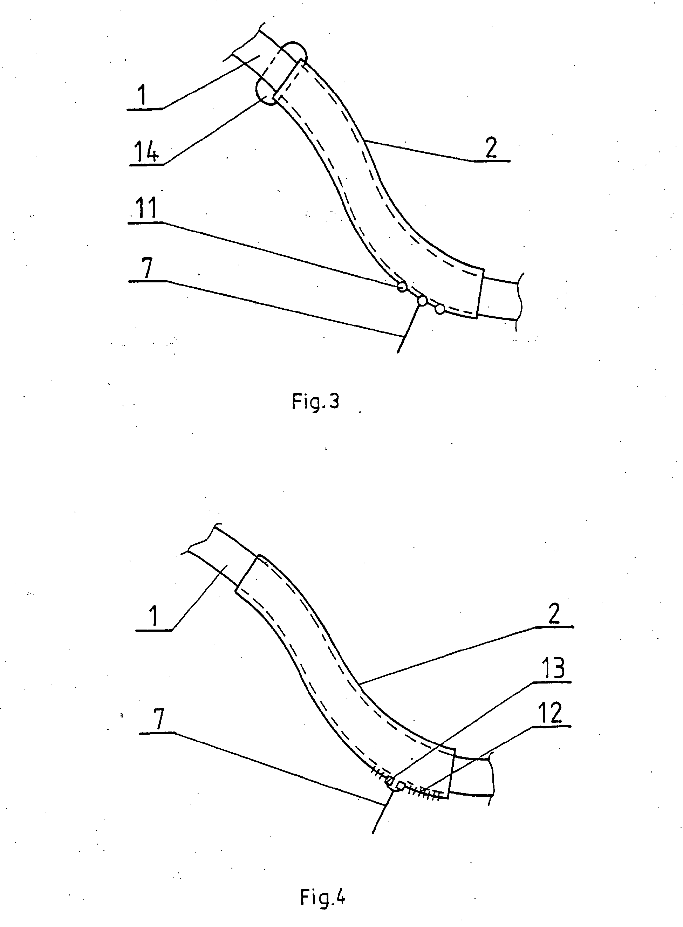

This cover plate (2) is placed on the safety belt in the car 1, adapting its shape to the required form without deranging its structure, as shown in Fig.1.

On the inside adjacent to the bust the cover plate (2) has additional swellings 5, at least along the upper inside camber 6 of the cover plate (2), thanks to which the pressure acting on both sides of the bust is decreased in the case of sudden braking or collision.

At the upper end of the Cover plate (2) additional pads 14 may be attached in order to neutralize the constant pressure exerted on the collar-bone or neck.

The cover plate (2) can be shifted along the safety belt 1 depending on the height of the given person, its position being practically stable due to its curvature, but can be still more stabilized by means of tensioning the stabilizing stay (7) making use of the provided lightening clamp 8, fastened to the external lower camber of the cover plate (2) and the abdominal part 9 of the safety belt 1, e.g. by means of a braces clasp 10. as the constitutional proportions of the human body from person to person, there are several hitches 11, and its most expedient to adapt the stabilizing stay in such a way that it would run perpendicularly to the tangential line of the lower camber of the cover plate (2).

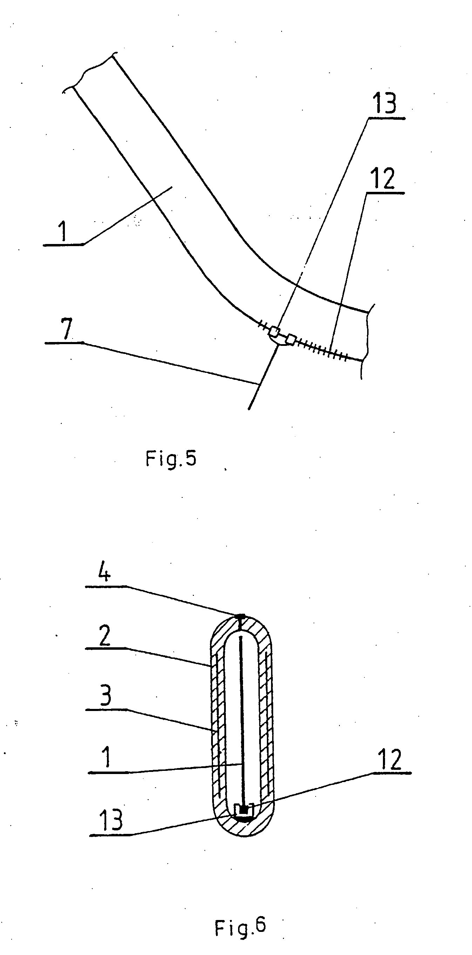

In the variant of the cover plate (2) presented in Fig.6, on the outer edge just under the edge just under the bust there is a segmental guide 12 with at least one slide and the pull fastened to the abdominal part of the safety belt.

The segmental guide 12 consists of the several profiled segments, e.g. beads clamped on the safety belt 1 along its edge, forming a kind of a zip fastener. The slide 13 has an adequately shaped channel of the guide 12, and this latter one has on its edges blocking segments.

In another variant, on the outer edge of the safety belt, just under the bust, there is a guide 12 with at least one slide 13 provided with a stabilizing stay, which is fastened to the abdominal part of the safety belt, thanks to which the direction of the safety belt can be arranged under the bust as shown in Fig.5, without the necessity of applying the cover plate (2).

In a still other variant the safety belt has on the outer edge under the bust a guide 12, and on the inside bottom edge there are slides 13, by means of which the cover plate (2) can be adjusted on the safety belt 1 and fastened by means of the clip.

## Claims

1. A set of anatomic shaping of the buckled belt in a car, particularly for women, comprising a plastic cover plate (2) fixed on the breast part of the belt, permitting an arch avoiding the bust and ensuring a stability of its positioning, **characterized in that** the cover plate (2) takes a form of an elongated capital "S", which forces the breast part of the belt (1) to adapt itself to the shape of elongated "S" as well, whereas side cover plate (2) has the form of a flat muff made of soft elastic material and at the external bottom part of the camber (6) is a stabilizing stay (7), fixed favourably with a hitch (11), which length can be adjusted and it is fastened to the abdominal part (9) of the safety belt (1).

2. The set according to claim 1, **characterized in that** the cover plate (2) is on the one side opened and shut by means of a joint (4) favourably by the zip.

3. The set according to claim 1, **characterized in that** the stabilizing stay (7) is fixed by a braces clasp (10) to the abdominal part (9) of the safety belt (1).

4. The set according to claim 1, **characterized in that** on the side of the external bottom camber (6) the cover plat (2) possesses several hitches (11) to fasten the stabilizing stay (7) which is placed in this hitch so that it must run perpendicularly to the tangent of the external bottom camber (6) of the cover plate (2).

5. The set according to claim 1, **characterized in that** the upper end of the cover plate (2) is attached to a separable pad (14) which neutralizes the pressure on the collarbone and neck.

6. The set according to claim 1, **characterized in that** the cover plate (2) shaped like a muff has inside profiled whalebones (3) forcing its elongation to the letter S.

7. The set according to claim 1, **characterized in that** the cover plate (2) at the side which adheres to the chest displays swellings (5) along the edges of at least the lower inner camber (6).

8. The set according to claim 1, **characterized in that** it is equipped with a tightening clamp (8) to the length regulation of the stabilizing stay (7) with a braces clasp (10) at the end.

## Patentansprüche

1. Einheit fuer anatomische gestaltung des angeschnallten Autosicherhheitsgurtes insbesonders fuer die Frauen, ist ausgeruestet in eine Kunsrstoffauflage, die auf den Brustteil des Gurtes aufgelegt ist. Dies ermoeglicht eine kurvenartige ausweichung der Brueste sowie Stabilisierung des Gurtes- ist gekennzeichnet damit, dass die Auflage(2) ist in einer Form gestreckten Buchstabe S gestaltet, wobei die Auflage(2) als verflaechte Muffe aus elastischen Kunststoff geformt ist und zur unteren Verkruemmung(6) der Auflage(2) mittels Verbindung(11) befestigt ist ein Stabilisierungszug(7) mit regulierbarer Laenge, der am Bauchteil(9) des Gurrtes angeschnallt ist.

2. Einheit gemaess Vorbehalt 1 ist gekennzeichnet damit, dass Auflage(2) ist einseitig auf-und zumachbar mittels Verbindung(4) in Form eines Reissverschlusses.

3. Einheit gemaess Vorbehalt 1 ist gekennzeichnet damit, dass Stabilisierungszug(7) ist trennbar zum Bauchteil(9) des Gurtes mittels Klemme(9) befestigt.

4. Einheit gemaess Vorbehalt 1, oder 6, oder 7 ist gekennzeichnet damit, dass Auflage(2) hat auf unteren Aussengewoelbe(6) mehrere Befestigungen(11) fuer Anbringung des Stabilisierungszuges(7) wobei der Stabilisierungsugszug(7) ist auf der Befestigung(11) plaziert, was einen optimalen verlauf des Stabilisierungszuges gewaehrleistet.

5. Einheit gemaess Vorbehalt 1 ist gekennzeichnet damit, dass zum oberen Ende der Auflage(2) ist ein Polster(14)der zwecks milderung des Druckes auf Schulter oder Halsteile dient.

6. Einheit gemaess Vorbehalt 1 ist gekennzeichnet damit, dass Auflage(2) in Form einer Muffe, hat innen Fischbeine(3) die laenglich die gestrckte Buchstabe S erzwingen.

7. Einheit gemaess Vorbehalt 1 ist gekennzeichnet damit, dass Auflage(2) hat entlang auf der Koerperseite eine Verdickung(5) die mindestens bis zum unteren Innengwoelbe(6) der Auflage(2) reicht.

8. Einheit gemaess Vorbehalt 1 ist gekennzeichnet damit, dass fuer die regulierung des Stabili sierungszuges (7) ist eine Durchlaufklemme(8) beendet mit Hosenklemme(10) vorhanden.

## Revendications

1. L'accessoire pour placement autonome le passage de la ceinture de sécurité lors qu'elle-ci est bouclée, notamment pour les femmes. Elle est munie d'une éclisse courbée en matière plastique applicable sur une partie de la ceinture au niveau de la poitrine et permettant d'omettre les seins et assurant la stabilité du placement de la ceinture. Elle se **caractérise par** une éclisse en forme de S allongé guidant la ceinture en partie de poitrine (1) aussi en forme rapprochée au S allongée. L'éclisse (2) se présente sous la forme d'un manchon aplati en matière flexible souple, et à la partie inférieure et extérieure de l'ovale (6) de l'éclisse (2) est fixée - avantageusement - à l'aide du crochet (11) et d'une bande d'écartement stabilisante (7) de longueur réglable et fixée à la partie horizontale (9) de la ceinture (1).

2. L'accessoire suivant la revendication 1, **caractérisé en ce que** l'éclisse (1) s'ouvre et se ferme - avantageusement - à l'aide du raccordement latéral (4) sous forme de la fermeture éclaire.

3. L'accessoire suivant la revendication 1, **caractérisé en ce que** la bande d'écartement (7) est fixée séparément à la partie horizontale (9) de la ceinture à l'aide de la borne de fixation (10).

4. L'accessoire suivant la revendication 1 ou 6 ou 7, **caractérisé en ce que** l'éclisse (2) dans sa partie ovale inférieure et extérieure (6) soit muni de plusieurs crochets (11) qui servent à fixer le stabilisateur (7), sachant que celui-ci (7) est placé à cette borne de fixation (11) qui assure son passage approximativement perpendiculaire à la ligne tangentielle de l'ovale inférieure et extérieure (6) de l'éclisse (2).

5. L'accessoire suivant la revendication 1, **caractérisé en ce qu'**un coussin (14) est fixé séparément à l'extrémité supérieure de l'éclisse (2) en vue d'empêcher la gêne sur l'épaule au niveau de la clavicule et sur le cou du conducteur ou passager.

6. L'accessoire suivant la revendication 1, **caractérisé en ce que** l'éclisse (2) sous la forme de manchon est baleinée (3) ce qui permet d'assurer la forme de S allongé.

7. L'accessoire suivant la revendication 1, **caractérisé en ce que** l'éclisse (2), dans sa partie destinée à venir en contact avec le corps du conducteur ou passager, présente les arêtes renflées (5) au moins le long de l'ovale inférieur et intérieur (6).

8. L'accessoire suivant la revendication 1, **caractérisé en ce qu'**en vue de régler la longueur du stabilisateur (7), elle est équipée de l'agrafe avec fente pour passage ceinture (8) avec la borne de fixation (10).
